# EUROPÄISCHE PATENTSCHRIFT

(11) **EP 1 456 561 B1**
(45) Veröffentlichungstag und Bekanntmachung des Hinweises auf die Patenterteilung: **17.09.2008**
(21) Anmeldenummer: 02792769.8
(22) Anmeldetag: 16.11.2002
(51) Int. Cl.: F16H 1/28

(54) **PLANETENGETRIEBE, GETRIEBEMOTOR UND BAUREIHE VON GETRIEBEMOTOREN**
PLANETARY GEAR, GEAR MOTOR AND SERIES OF GEAR MOTORS
ENGRENAGE PLANETAIRE, MOTEUR A ENGRENAGES ET SERIE DE MOTEURS A ENGRENAGES

(30) Priorität: 11.12.2001 DE 10160685
(43) Veröffentlichungstag der Anmeldung: 15.09.2004
(73) Patentinhaber: SEW-Eurodrive GmbH & Co, 76646 Bruchsal (DE)
(72) Erfinder: CHRIST, Michael, 76689 Karlsdorf-Neuthard (DE); ZIMMERMANN, Heinrich, 76646 Bruchsal (DE); KASPER, Jürgen, 67360 Lingenfeld (DE)
(86) Internationale Anmeldenummer: PCT/EP2002/012871
(87) Internationale Veröffentlichungsnummer: WO 2003/050434

(56) Entgegenhaltungen:
- EP-A- 0 567 048
- EP-A- 0 687 837
- WO-A-02/052169
- DE-A- 2 649 949
- DE-A- 3 502 015
- DE-A- 19 647 063
- DE-A- 19 956 789
- "ZF-SERVOPLAN Planetengetriebe für Servomotoren" ZF MASCHINENANTRIEBE GMBH * Seiten 5,7 * & "ZF-SERVOPLAN Planetengetriebe, Baureihe PG" Oktober 2000 (2000-10), ZF MASCHINENANTRIEBE GMBH , FRIEDRICHSHAFEN

## Beschreibung

Die Erfindung betrifft ein Planetengetriebe, einen Getriebemotor und eine Baureihe von Getriebemotoren.

Aus der DE 199 56 789 A1, welche den nächstliegenden Stand der Tecknik bildet, ist ein Planetengetriebe bekannt, das zum Anbau an einen Elektromotor vorgesehen ist und kompakt aufgebaut ist. Insbesondere ist ein Dichtungselement, welches die Sonnenradwelle gegenüber dem Außenraum abdichtet, auf gegenüber dem Aufnahmebereich für die Abtriebswelle des Elektromotors reduziertem Außendurchmesser angeordnet, wodurch eine Verminderung der Wärmeentwicklung erreichbar ist. Nachteilig ist dabei, dass das Lager für die Sonnenradwelle weit entfernt sitzt vom anzubauenden Motor. Außerdem ist bei dem Planetengetriebe die Fertigung eines zufriedenstellenden Rundlaufes der Abtriebswelle aufwendig und kostspielig. Auch ist die Wärmeentwicklung beim Dichtelement und beim Lager 28 trotz der Durchmesserreduzierung bei hohen eintreibenden Drehzahlen erheblich, wie beispielsweise bei Servoantrieben häufig vorkommend. Weiter nachteilig ist, dass das Dichtelement nur schlecht mit Schmierstoff versorgbar ist, da es mittels des Lagers 28 vom Innenraum des Getriebes abgetrennt ist. Der Planetenträger bildet zwar einen Lagersitz für das Lager 30, ist aber unterbrochen, weil die Bohrungen für die Planetenbolzen vorzusehen sind. Dies wirkt sich negativ auf die Festigkeit und Verdrehsteifigkeit aus. Die Lagerung des Planetenträgers erfolgt gegen das Getriebegehäuse und erfordert daher ein kostspieliges großes Lager 30. Weil die Lager 30 und 32 in X-Form angeordnet sind, ist der fiktive Lagerabstand der Lager 30 und 32 klein und es sind daher nur entsprechend geringe Querkräfte erlaubt. Bei kleinen Übersetzungszahlen i, also großer Sonne, ist die Montage der Sonne problematisch und wird unter Umständen sogar unmöglich.

WO 02/052169A bildet den Stand der Tecknik gemäss artikel 54(3) EPÜ. Die Publikation "ZF-Servoplan Pilanetengetriebe für Servomotoren" offenbart ein ähnliches Planetengetriebe.

Der Erfindung liegt daher die Aufgabe zugrunde, ein Planetengetriebe weiterzubilden, das für die Verbindung mit einem Elektromotor verwendbar ist und bei kompakter Bauart leistungsfähiger ist. Außerdem soll das Planetengetriebe in gesamtwirtschaftlicher Betrachtung kostengünstiger und ohne großen Aufwand einfach zu fertigen sein.

Erfindungsgemäß wird die Aufgabe bei dem Planetengetriebe nach den in Anspruch 1 angegebenen Merkmalen, bei einem Getriebemotor nach den in Anspruch 11 angegebenen Merkmalen und bei einer Baureihe von Getriebemotoren gelöst.

Wesentliche Merkmale der Erfindung bei dem Getriebestufe und dem diese Getriebestufe umfassenden Getriebe sind, dass die Planetengetriebestufe,
umfassend Planetenräder, die mit einem Sonnenrad und einer zum Getriebegehäuse vorgesehenen Innenverzahnung im Eingriff stehen, wobei die Planetenräder in einem, den Abtrieb bildenden, drehbaren Planetenträger gelagert sind, dem abtriebsseitig ein Dichtungselement zugeordnet ist, wobei der Planetengetriebestufe eintriebsseitig ein weiteres Dichtelement zugeordnet ist, und wobei das Getriebegehäuse eintriebsseitig derart geformt ist, dass eine Schnittstelle gebildet ist zum Verbinden mit weiteren Komponenten, die mindestens eine mit dem Sonnenrad verbundene Welle umfassen.

Von Vorteil ist dabei, dass eine Schnittstelle vorgesehen ist zur Verbindung mit weiteren Komponenten. Somit lässt sich die Planetengetriebestufe mit verschiedenen Elektromotoren oder Kupplungen oder anderen Getriebestufen verbinden. Dadurch wird die Planetengetriebestufe bei verschiedenen Varianten innerhalb einer Baugröße der Baureihe verwendbar. Auf diese Weise wird schon eine Reduktion der Anzahl der Einzelteile erreichbar und die Kosten zur Produktion der Planetengetriebestufe und der zugehörigen Baureihe werden reduzierbar.
**Die Reduzierung der** Teilevielfalt ist gerade im Hinblick auf eine weltweit verteilte Montage der Getriebe besonders vorteilhaft. Weiter vorteilhaft ist bei der Erfindung, dass die Baulänge verringert ist, da die anschließbaren Komponenten aufeinander angepasst und abgestimmt sind, wodurch insbesondere auch Einsparungen an Gehäuseteilen und eine Optimierung des Massenträgheitsmoments ausführbar sind.

Von Vorteil ist, dass das Gehäuse der weiteren Komponente einen Sitz für den Innenring des eintriebsseitigen Lagers der Getriebestufe aufweist und der entsprechende Außenring dieses Lagers im Planetenträger angeordnet ist. Von Vorteil ist dabei, dass durch entsprechende Ausformung des Gehäuses der weiteren Komponente das Lager kleiner ausführbar ist und die gesamte Baulänge des Getriebes reduzierbar ist.

Von Vorteil ist, dass das eintriebsseitige Dichtungselement der Getriebestufe axial abtriebsseitiger als das eintriebsseitige Abtriebslager angeordnet ist. Von Vorteil ist dabei, dass eine gute Abdichtung gegen die Umgebung auch für das Abtriebslager erzielt wird.

Eintreibende Lager und Wellendichtringe sind auf reduziertem Durchmesser angeordnet. Dies reduziert die Lager- und Dichtungsverlustleistung und bedingt somit eine geringere Wärmeentwicklung.

Somit sind mit der Erfindung ein- und auch zweistufige Planetengetriebe für Roboter- und Handhabungsgeräte herstellbar, die kompakte und leistungsstarke, hochdynamisch betreibbare Antriebe erfordern.

Bei einer vorteilhaften Ausgestaltung ist die weitere Komponente als
- eine eine Kupplungswelle umfassende Kupplung,
- einen eine Rotorwelle umfassenden Elektromotor
- eine weitere Getriebestufe, umfassend einen Planetenträger, der zur Planetengetriebestufe hin als Welle ausgeformt,
ausgebildet sind. Von Vorteil ist dabei, dass verschiedene Komponenten verbindbar sind und somit die Teilevielfalt reduziert ist unter Beibehaltung einer großen Varianz in der Baureihe, also ein Baukastensystem mit allen zugehörigen Vorteilen geschaffen ist, insbesondere auch die Reduzierung der Lagerkosten.

Bei einer vorteilhaften Ausgestaltung ist das der Planetengetriebestufe eintriebsseitig zugeordnete weitere Dichtelement auf der von der Komponente umfassten Welle angeordnet, wobei der Durchmesser der Welle im Bereich des Dichtelements reduziert ist gegenüber dem Durchmesser der Welle in einem axial weiter eintriebsseitig liegenden Bereich. Von Vorteil ist dabei, dass die Wärmeentwicklung reduziert ist und somit das Getriebe insbesondere bei einem Servoantrieb einsetzbar ist bei hochdynamischem Betrieb und hohen Drehzahlen. Außerdem ist das Dichtelement kleiner und somit kostengünstiger ausführbar, da es für nur geringere Geschwindigkeiten bei kleinerem Durchmesser auszulegen ist.

Bei einer vorteilhaften Ausgestaltung ist der axial weiter eintriebsseitig liegenden Bereich
- der Aufnahmebereich für die Rotorwelle
- ein Bereich der Rotorwelle im Inneren des Elektromotors
- ein axial weiter eintriebsseitig liegender Bereich des als Welle ausgeformten Planetenträgers in der weiteren Getriebestufe. Von Vorteil ist dabei, dass die genannte Durchmesserreduktion für das Dichtelement gegenüber diesem axial weiter eintriebsseitig liegenden Bereich ausführbar ist. Denn der Durchmesser dieses Bereichs ist bestimmt von den technischen Anforderungen der weiteren Komponente, wie beispielsweise maximal zu übertragendes Drehmoment, maximal zulässige Querkraft oder dergleichen. Dass das Anordnen des Dichtelementes auf einem gegenüber diesem so definierten und erzwungenen Durchmesser reduzierten Durchmesser ausführbar ist, ist überraschend und insbesondere wegen der Wärmeentwicklung vorteilhaft.

Bei einer vorteilhaften Ausgestaltung ist das abtriebsseitige Dichtungselement der Getriebestufe axial abtriebsseitiger als das abtriebsseitige Abtriebslager angeordnet, also vom Abtriebslager aus gesehen im Innenraum des Getriebes. Von Vorteil ist dabei, dass als Abtriebslager ein abgedichtetes Lager verwendbar ist und das Dichtungselement gut mit Schmierstoff versorgbar ist, da der Innenraum der Getriebestufe ausreichend Schmierstoff umfasst.

Bei einer vorteilhaften Ausgestaltung ist der Planetenträger eintriebsseitig über ein Lager im Gehäuseteil der Planetengetriebestufe gelagert und abtriebsseitig über ein Lager im Gehäuseteil der weiteren Komponente gelagert. Von Vorteil ist dabei, dass das Getriebe mit sehr kleiner Baulänge ausführbar ist, also sehr kompakt ist.

Bei einer vorteilhaften Ausgestaltung ist beim Herstellen der weiteren Komponente
- die Bohrung für die Welle dieser Komponente und
- der Lagersitz des diese Welle lagernden Lagers,
- der Lagersitz für den Innenring des den Planetenträger im Gehäuseteil der weiteren Komponente lagernden Lagers und
- der zur Bildung der Schnittstelle vorgesehene Bereich des Gehäuseteils
   in einer Aufspannung bearbeitet. Bei einer weiter vorteilhaften Ausgestaltung ist beim Herstellen der Planetengetriebestufe
- der Lagersitz für den Außenring des den Planetenträger im Gehäuseteil der Planetengetriebestufe lagernden Lagers und
- der zur Bildung der Schnittstelle vorgesehene Bereich des Gehäuseteils der Planetengetriebestufe
   in einer Aufspannung bearbeitet. Von Vorteil ist dabei, dass eine möglichst hohe Fertigungsgenauigkeit bei möglichst geringen Kosten erreichbar sind. Außerdem werden die Toleranzen optimiert, die Rundlaufeigenschaften des Getriebes verbessert und eine weltweite Montage durch die an einem Ort mit hochpräzisen Werkzeugmaschinen durchgeführte Endbearbeitung ermöglicht.

Wesentliche Merkmale der Erfindung bei der Baureihe von Getriebemotoren sind, dass die Baureihe mindestens eine Baugröße umfasst, wobei die Baugrößen jeweils mindestens eine Variante umfassen, wobei die Varianten jeweils mindestens einen Elektromotor und eine oder mehrere Getriebestufen umfassen, wobei mindestens eine Getriebestufe als Planetengetriebestufe ausgeführt ist und die Getriebestufen jeweils eintriebsseitig eine Schnittstelle derart aufweisen, dass eine weitere Komponente, die abtriebsseitig eine entsprechend ausgebildete Schnittstelle aufweist, verbindbar ist. Von Vorteil ist dabei, dass durch die Ausbildung einer Schnittstelle erst das Baukastenprinzip ermöglicht wird, wodurch dann die Vorteile der Reduzierung der Teilevielfalt unter Beibehaltung der hohen Varianz und geringer Kosten ausführbar sind.

Bei einer vorteilhaften Ausgestaltung ist die weitere Komponente eine Getriebestufe, eine Kupplung oder ein Elektromotor. Von Vorteil ist dabei, dass mittels der Kupplung nicht nur herstellereigene sondern auch industrieübliche Elektromotoren verbindbar sind. Somit ist der beschriebene Baukasten auch für allgemein erhältliche Motoren anwendbar. Bei Auswahl der herstellereigenen, mit der Schnittstelle versehenen Motoren ist jedoch ein viel kompakterer Antrieb herstellbar.

Bei einer vorteilhaften Ausgestaltung ist bei der jeweiligen Variante bei der Planetengetriebestufe das Sonnenrad eintriebsseitig mit einer Welle der weiteren Komponente je nach Übersetzungszahl mittels Einsteckritzel oder Aufsteckritzel verbunden. Von Vorteil ist dabei, dass innerhalb desselben Gehäuses die Verzahnung derart stark variierbar ist, dass ein weiter Bereich von Übersetzungszahlen realisierbar ist.

Bei einer vorteilhaften Ausgestaltung ist bei einer Variante der Elektromotor, insbesondere ein industrieüblicher Standard-Motor, abtriebsseitig mit einer anderen Schnittstelle, insbesondere einer nach NEMA oder IEC genormten Schnittstelle, ausgeführt und über eine Kupplung mit der Getriebestufe verbindbar, wobei die Kupplung zu den weiteren Komponenten gehört. Von Vorteil ist dabei, dass genormte Motoren mittels der Kupplung anschließbar sind und somit eine Baureihe herstellbar ist, die auch Antriebe umfasst, die mit industrieüblichen und herstellereigen speziellen Motoren erzeugbar ist.

Somit ist eine Baureihe von Antrieben anbietbar, deren Varianten eine höhere maximal zulässige Querkraft und eine erhöhte Verdrehsteifigkeit aufweisen.

Weitere vorteilhafte Ausgestaltungen ergeben sich aus den Unteransprüchen.

### Bezugszeichenliste

- 101, 201, 301, 401, 4011, 5011: Planetenträger
- 102, 202, 302, 402, 4021, 5021, 5022: Getriebegehäuse
- 103, 203, 303, 403, 503: Abtriebslager A
- 104, 204, 304, 4041, 4042, 5041, 5042: Planetenbolzen
- 105, 205, 305, 4051, 4052, 5051, 5052: Planetenrad
- 107,207,307,407,507: Abtriebslager B
- 112,212,312,412,512: Radialwellendichtring Abtrieb
- 113, 213, 313, 4131, 4132, 5131, 5132: Planetenlager
- 114, 214,314, 4141, 4142, 5141, 5142: Dichtungsstelle
- 115, 315, 4151, 4152: Passfeder
- 116,316,4161,4162: Sonnenrad (Aufsteckritzel)
- 117: Kupplungswelle
- 118: Klemmring
- 119, 219, 319:: Radialwellendichtring
- 120: Kupplungslager
- 121: Kupplungsgehäuse
- 122, 123, 422, 522: Sicherungsring
- 124: Dichtscheibe
- 125: Wellscheibe
- 126, 226, 326: Verschlussstopfen

- 206, 506, 5061: Sonnenrad (Einsteckritzel)
- 208, 321, 508: A-Lagerschild Motor
- 210,310,410,510: A-Lager Motor
- 211, 511: Motorwelle für Einsteckritzel

- 311, 411: Motorwelle für Aufsteckritzel

- 4191,5191: Lager
- 4022: Gehäuseteil
- 4012: Planetenträgerwelle

Die Erfindung wird nun anhand von Abbildungen näher erläutert:
Figur 1 zeigt einen Anbau eines industrieüblichen Elektromotors mittels einer Kupplung.
Figur 2 zeigt einen Direktanbau eines herstellereigenen Elektromotors mit Einsteckritzel.
Figur 3 zeigt einen Direktanbau eines herstellereigenen Elektromotors mit Aufsteckritzel.
Figur 4 zeigt einen Direktanbau eines Elektromotors mit Aufsteckritzel (zweistufig).
Figur 5 zeigt einen Direktanbau eines Elektromotors mit Einsteckritzel (zweistufig).

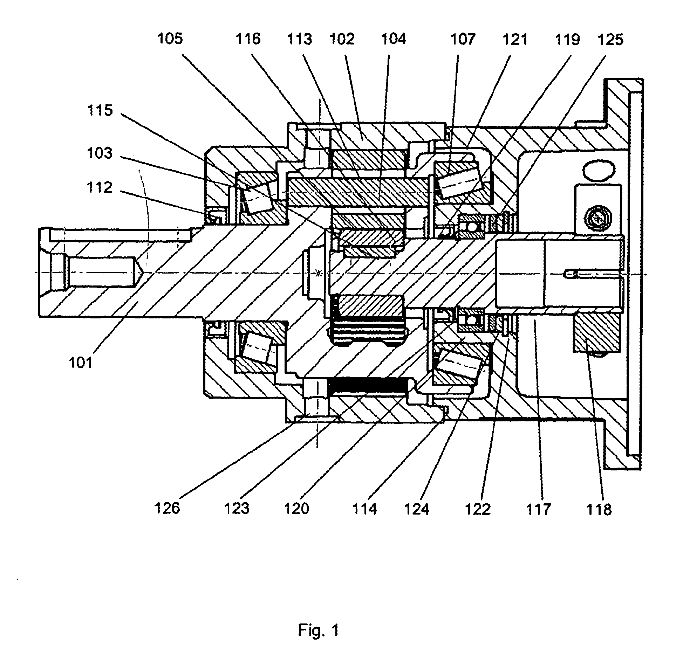

In der Figur 1 ist ein Ausführungsbeispiel einer einstufigen Variante der Baureihe gezeigt. Der abtriebsseitige Planetenträger 101 ist über Abtriebslager 103 im Getriebegehäuse 102 gelagert und wird von Planetenlager 113 tragenden Planetenbolzen 104 angetrieben. Die auf den Planetenlagern 113 gelagerten Planetenräder 105 stehen im Eingriff mit dem Sonnenrad 116 das als Aufsteckritzel mittels einer Passfederverbindung 115 formschlüssig mit der Motorwelle verbunden ist. Das Abtriebslager B 107 lagert den Planetenträger 101 nach innen gerichtet im Kupplungsgehäuse 121 des Motors. Daher ist das Abtriebslager B 107 auf kleinerem Durchmesser wirksam und somit kleiner, kompakter und kostengünstiger gegenüber dem Stand der Technik ausgeführt.

Im gleichen axialen Bereich wie der Aufnahmebereich des Abtriebslagers B 107 liegt auch das Kupplungslager 120, das die Kupplungswelle 117 gegen das Kupplungsgehäuse 121 abstützt. Dieses Kupplungslager 120 sitzt auf einem Durchmesser, der gegenüber dem Durchmesser der Kupplungswelle im Aufnahmebereich der Motorwelle reduziert ist. Im Aufnahmebereich der Motorwelle ist der Klemmring 118 zur kraftschlüssigen Verbindung der Motorwelle mit der Kupplungswelle 117 angebracht.

Der Sicherungsring 122 sichert über die Dichtscheibe 124 und die Wellscheibe 125 die axiale Bewegung des Kupplungslagers 120 ab. Somit wird mit der Dichtscheibe das Kupplungslager 120 zusätzlich abgedichtet, wobei das Kupplungslager 120 als abgedichtetes oder auch als Standard-Lager ausführbar ist. Die Wellscheibe 125 kompensiert thermisch bedingte Längenausdehnungen in axialer Richtung und schützt somit das Lager gegen zu hohe Axialkräfte.

Als Dichtelement ist der Radialwellendichtring 119 der Kupplungswelle hinter dem Kupplungslager 120 im Innenraum des Getriebes angeordnet. Er sitzt somit auf einem gegenüber dem Durchmesser der Kupplungswelle 117 im Aufnahmebereich der Motorwelle reduzierten Durchmesser.

Abtriebsseitig ist als Dichtelement ein Radialwellendichtring 112 vorgesehen, der das Abtriebslager A 103 gegen Verschmutzung schützt und den Austritt von Schmierstoff verhindert. Das Abtriebslager A 103 ist auf diese Weise auch stets gut versorgbar mit Schmierstoff.

Das Kupplungsgehäuse 121 ist mit dem Getriebegehäuse 102 über eine Dichtungsstelle 114 verbunden. Das Getriebegehäuse 102 ist mit dieser Dichtungsstelle 114 derart als Schnittstelle ausgeformt, dass diese innerhalb der Baugröße bei allen Varianten gleichartig ausgebildet ist. Somit ist nicht nur die in Figur 1 gezeigte Kupplungswelle anbaubar sondern auch jede andere Vorrichtung, die eine entsprechende Schnittstelle aufweist. In den weiteren Figuren wird diese Möglichkeit an konkreten erfindungsgemäßen Ausführungsbeispielen aufgezeigt. Mit dieser Schnittstelle entsteht somit ein Baukasten, der bei geringer Teileanzahl eine große Vielfalt ermöglicht.

In dem Ausführungsbeispiel der Figur 1 weist das Getriebegehäuse 102 eine Innenverzahnung auf, mit der die Planetenräder 105 im Eingriff stehen. Bei einem anderen Ausführungsbeispiel ist ein spezielles Hohlrad vorgesehen, das in das Getriebegehäuse 102 eingebaut ist und mit diesem kraft- und oder formschlüssig verbunden ist. Je nach Anzahl der Varianten in der Baugröße oder produzierte Stückzahl insgesamt ist gemäß Wirtschaftlichkeit und Kundenanforderungen, wie beispielsweise der anzubietende Bereich von Übersetzungszahlen, ist also das Getriebegehäuse 102 mit oder ohne integrierter Verzahnung vorgesehen.

In der Figur 1 sind Abtriebslager A 103 und Abtriebslager B 107 in Tandemanordnung vorgesehen. Auf diese Weise ist der fiktive Lagerabstand sehr groß, weshalb das Getriebe eine große, maximal zulässige Querkraft aufweist.

Der Planetenträger 101 bildet einen nicht unterbrochenen Lagersitz für das Abtriebslager B 107. Daher ist eine hohe Festigkeit und Verdrehsteifigkeit ausführbar. Der Außenring des Abtriebslagers B 107 sitzt im Planetenträger 101. Der zugehörige Innenring sitzt auf kleinerem Radius auf dem Kupplungsgehäuse 121. Das Abtriebslager B 107 ist also kleiner und damit kostengünstiger ausführbar im Vergleich zum erstgenannten Stand der Technik.

Der Verschlussstopfen 126 dient zum Ölablass und ermöglicht somit einen Ölwechsel.

Die Erfindung bezieht sich auch auf eine Baureihe, die mehrere Baugrößen umfasst, die mehrere Varianten umfassen. Insbesondere durch die die Dichtungsstelle 114 umfassende Schnittstelle sind verschiedene Komponenten verbindbar.

In Figur 1 ist als verbindbare Komponente eine Kupplungswelle 117 mit Kupplungsgehäuse 121 vorgesehen, die ein eigenes Kupplungslager 120 aufweist. Die Kupplungswelle 117 ist mit der Sonne mittels Passfeder verbunden, wobei die Sonne als Aufsteckritzel ausgeführt ist. Mit dieser Kupplungswelle 117 ist wiederum eintriebsseitig eine Motorwelle mittels Klemmring 118 verbindbar.

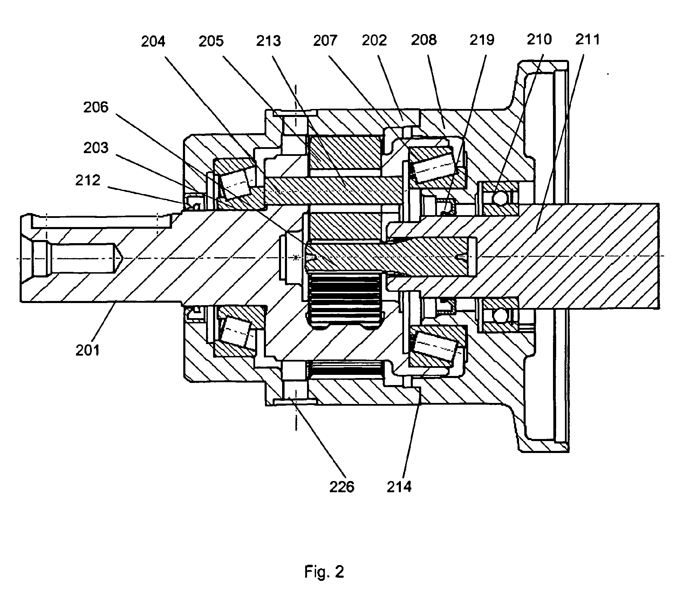

In der Figur 2 ist als verbindbare Komponente statt der Kupplungswelle 117 ein Elektromotor verbunden, der an seinem Gehäuse, also dem A-Lagerschild Motor 208, die die Dichtungsstelle 214 umfassende Schnittstelle aufweist. Somit ist das Kupplungslager 120 entbehrlich und das A-Lager Motor 210 genügt zur Lagerung des Elektromotors. Insgesamt weist das Getriebe zusammen mit dem Elektromotor nur die Abtriebslager A 203 und Abtriebslager B 207 sowie das A-Lager Motor 210 und ein weiteres nicht gezeigtes Lager zur Lagerung des Rotors. Somit ist ein Lager eingespart, der Wirkungsgrad erhöht und die Wärmeentwicklung reduziert. Der Wellendichtring 219 sitzt wiederum auf einem Durchmesser, der gegenüber dem Durchmesser des Rotors im Motor reduziert ist. Ebenso sitzt der Radialwellendichtring 219 der Kupplungswelle auf reduziertem Durchmesser und weist daher eine verminderte Wärmeentwicklung auf. Das Sonnenrad 206 ist als Einsteckritzel ausgebildet und in einer Bohrung des Rotors mit diesem verbunden. Getriebeseitig ist das A-Lagerschild 208 des Motors ähnlich geformt wie das Kupplungsgehäuse 121, damit das Abtriebslager B 207 in gleicher Weise mit gleichem Sitz aufgenommen ist wie in Figur 1. Somit ist auch hier das Abtriebslager B 207 klein und somit kostengünstig ausführbar und entwickelt wenig Wärme.

Der Verschlussstopfen 226 dient zum Ölablass und ermöglicht somit einen Ölwechsel.

In allen Figuren sind die Komponenten
Planetenträger 101, 201, 301, 401, 4011, 5011,
Getriebegehäuse 102,201, 301, 401, 4011, 5011,
Abtriebslager A 103, 203, 303, 403, 503,
Planetenbolzen 104, 204, 304, 4041, 5041,
Planetenrad 105, 205, 305, 4051, 5051,
Abtriebslager B 107, 207, 307, 407, 507,
Radialwellendichtring Abtrieb 112, 212, 312, 412, 512,
Planetenlager 113, 213, 313, 4131, 5131,
Dichtungsstelle 114, 214,314, 4141, 5141 und
Verschlussstopfen 126, 226, 326 gleichartig. Somit ist ein Lagerbestand für das jeweilige Teil nur für jede Baugröße und nicht für alle Varianten in allen Baugrößen vorzuhalten. Dies reduziert die Kosten für die Baureihe.

Das Planetengetriebe nach Figur 2 ist also besonders gut geeignet, um entsprechend geformte Elektromotoren direkt anzubauen. Insbesondere ist es hiermit einem Hersteller ermöglicht, eine Baureihe von Motoren vorzusehen und anzubieten, die mit dem gezeigten Planetengetriebe kombinierbar sind. Dies ist zwar besonders vorteilhaft, weil der so herstellbare Getriebemotor besonders kompakt, kostengünstig, möglichst ideal abgestimmt und leistungsfähig ist und auch nur die genannten vier Lager erfordert mit den zugehörigen Vorteilen, jedoch ist der Kunde auf diese Weise gebunden an den entsprechenden Hersteller und seine in der Baureihe vorhandenen Komponenten. Aus diesem und aus anderen Erfordernissen, wie Spezialkonstruktionen oder dergleichen, besteht das Bedürfnis auch am Markt erhältliche industrieübliche Motoren mit dem Getriebe verbinden zu können, auch wenn einzelne technische Daten verschlechtert sind. Mit dem erfindungsgemäßen Getriebe ist dies ausführbar und zwar besonders einfach: Da das Getriebe die beschriebene Schnittstelle zum Motor hin besitzt, ist auch die Kupplungswelle nach Figur 1 verbindbar. Diese bietet aber für industrieübliche Motoren die Möglichkeit des Anbaus mittels des Klemmrings 118.

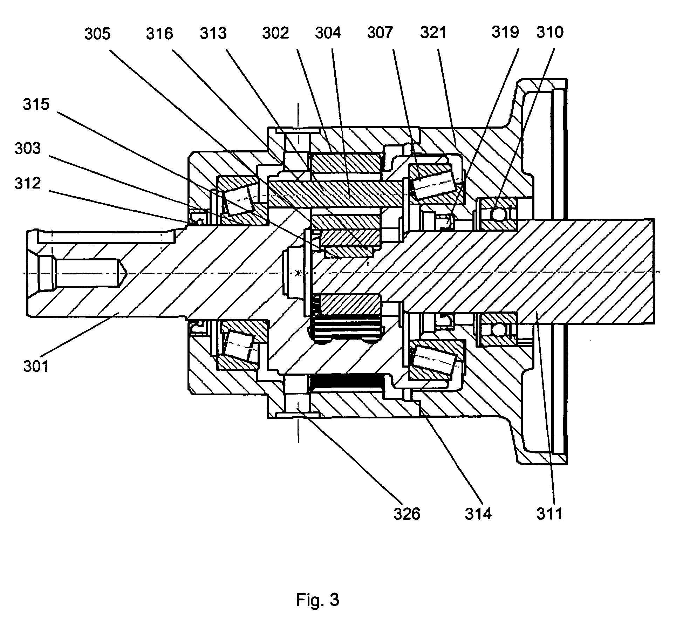

Bei kleinen Übersetzungen, beispielsweise i= 3 ist als Sonnenrad ein Aufsteckritzel gemäß Figur 1 oder Figur 3 vorgesehen. Bei großen Übersetzungen , beispielsweise i=10, ist als Sonnenrad ein Einsteckritzel gemäß Figur 2 vorgesehen. In den Figuren sind nicht alle möglichen derartigen Kombinationen gezeigt. Innerhalb einer Baugröße der Baureihe sind aber die genannten Kombinationen mit Aufsteckritzel oder Einsteckritzel bei dem Getriebe mit Kupplungswelle zum Anbau des industrieüblichen Motors gemäß Figur 1 oder Kombinationen mit Aufsteckritzel oder Einsteckritzel bei dem Getriebe gemäß Figur 2 und 3 vorgesehen.

Bei weiteren erfindungsgemäßen Ausführungsbeispielen sind auch weitere SonnenradWelle Verbindungen ausführbar, wie beispielsweise die Ausführung des Sonnenrades als Aufsteckritzel auf einen Adapter der wellenseitig, also zur Kupplungswelle oder zur Rotorwelle hin, dem Einsteckritzel entsprechend verbindbar ist. Dies ermöglicht die Verwendung immer der gleichen Bohrung in der Welle und reduziert somit die Anzahl der Wellen innerhalb einer Baugröße.

In der Figur 3 ist ein Planetengetriebe gezeigt, um die genannten speziell angepassten Elektromotoren, insbesondere herstellereigene, direkt anzubauen. Das hier verwendete Aufsteckritzel lässt es zu, dass der Kopfkreisdurchmesser des Sonnenrades größer werden kann als der Wellendichtring- oder Lagerdurchmesser. Bei Verschleiß des Wellendichtringes 319 kann dieser demontiert werden. Dies spart Kosten auf Seiten des Motors.

In der Figur 1 hingegen ist ein Planetengetriebe gezeigt, um beliebige industrieübliche Motoren anzubauen. Wellendichtring- und Lagerdurchmesser sind auf einem im Wesentlichen kleinstmöglichen Innendurchmesser angeordnet, der sich ergibt aus dem im Wesentlichen kleinstmöglichen Einsteckritzeldurchmesser.

Entsprechend der Figur 1 ist auch ein nicht-gezeigtes, erfindungsgemäßes Ausführungsbeispiel als zusätzliche Variante innerhalb der Baureihe vorgesehen, das statt des in Figur 1 gezeigten Aufsteckritzels ein Einsteckritzel aufweist. Bei weiteren erfindungsgemäßen Ausführungsbeispielen sind auch Varianten ausführbar, die statt des Einsteckritzels und statt des Aufsteckritzels einen Einsteckzapfen mit aufgestecktem Ritzel umfassen, der entsprechend dem Einsteckritzel in die Kupplungswelle eingesteckt ist.

In der Figur 1 ist das Kupplungslager 120 unterhalb des Abtriebslagers A 107 angeordnet, also axial im gleichen Bereich. In der Figur 2 ist das A-Lager Motor 210 axial eintriebsseitiger angeordnet. In weiteren erfindungsgemäßen Varianten ist auch bei einer Variante nach Figur 1 das Kupplungslager axial eintriebsseitiger angeordnet. In anderen erfindungsgemäßen Varianten ist bei einer Variante nach Figur 2 das A-Lager Motor unterhalb des Abtriebslagers A angeordnet, also axial im gleichen Bereich. Die Wahl der jeweiligen Ausführung ist insbesondere durch das zu übertragende Drehmoment und den somit bedingten Durchmesser beeinflusst.

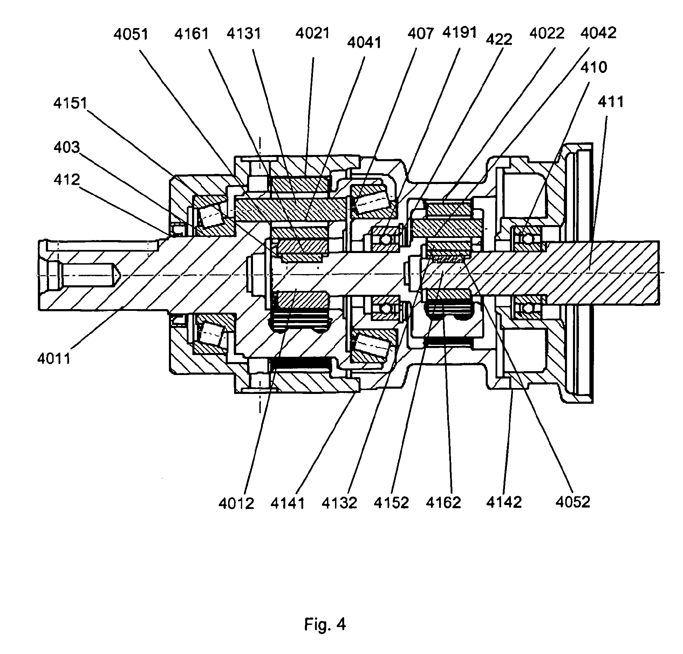

In der Figur 4 ist statt der Kupplung gemäß Figur 1 oder den A-Lagerschilden gemäß Figuren 2 und 3 eine weitere Getriebestufe zur Bildung eines zweistufigen Planetengetriebes vorgeschaltet. An dieses sind wiederum Elektromotoren verbindbar. Bei kleinen Übersetzungen, beispielsweise i<=100 wie insbesondere i=16, ist als Sonne ein Aufsteckritzel vorgesehen, da hier der Kopfkreisdurchmesser des Sonnenrades größer werden kann als der Wellendichtring- oder Lagerdurchmesser.

Der Planetenträger 4011 ist über das Abtriebslager A 403 im Getriebegehäuse 4021 gelagert und wird von den auf Planetenbolzen 4041 mittels Planetenlager 4131 gelagerten Planetenrädern 4051 angetrieben, die mit dem als Aufsteckritzel ausgeführten Sonnenrad 4161 im Eingriff stehen, das mittels der Passfeder 4151 mit der Planetenträgerwelle 4012 verbunden ist. Der Planetenträger 4011 ist über das Abtriebslager B 407 im entsprechend geformten Getriebegehäuse 4021 der anderen Getriebestufe gelagert. Das Getriebegehäuse 4022 weist die eine Dichtungsstelle 4141 umfassende Schnittstelle auf.

Der Planetenträger 4011 ist über das Lager 4191 im Getriebegehäuse 4021 gelagert und wird von den auf Planetenbolzen 4042 mittels Planetenlager 4132 gelagerten Planetenrädern 4052 angetrieben, die mit dem als Aufsteckritzel ausgeführten Sonnenrad 4162 im Eingriff stehen, das mittels der Passfeder 4152 mit der Motorwelle 411 verbunden ist. Die Motorwelle 411 ist über das A-Lager Motor 410 in dessen A-Lagerschild gelagert. Dieses ist wiederum mit der genannten die Dichtungsstelle 4142 umfassenden Schnittstelle ausgeführt. Das Getriebegehäuse 4022 weist eintriebsseitig und abtriebsseitig die genannte Schnittstelle auf, wodurch das Baukastenprinzip ausführbar ist. Dabei werden diese Schnittstellen mittels der Dichtungsstellen 4141, 4142 dicht ausgeführt. Der Radialwellendichtring Abtrieb 412 ist auf reduziertem Durchmesser angebracht.
Der Sicherungsring 422 sichert in axialer Richtung.

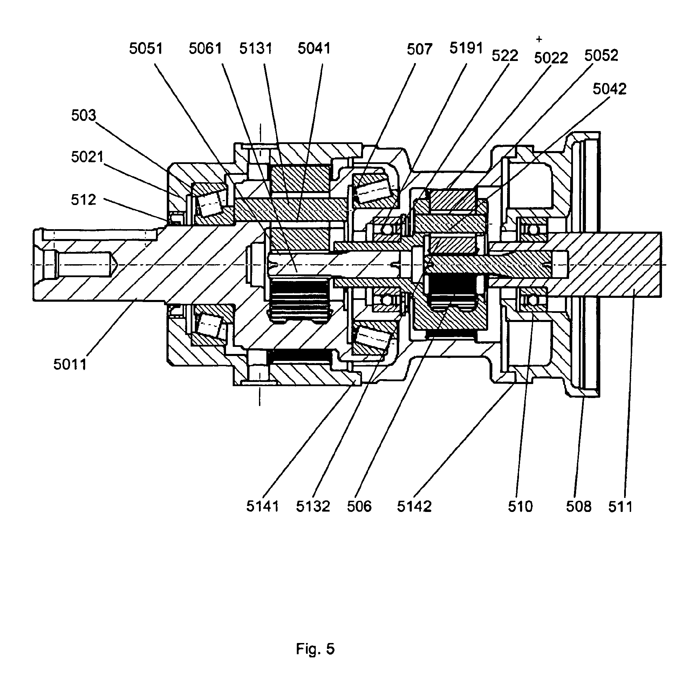

In der Figur 5 ist wiederum ein solches zweistufiges Planetengetriebe gezeigt, um herstellereigene Elektromotoren direkt anzubauen. Bei großen Übersetzungen, beispielsweise i >=12 wie insbesondere i=100, ist ein Einsteckritzel vorgesehen. Dieses ist in beiden Getriebestufen ausgeführt.

Der Planetenträger 5011 ist über das Abtriebslager A 503 im Getriebegehäuse 5021 gelagert und wird von den auf Planetenbolzen 5041 mittels Planetenlager 5131 gelagerten Planetenrädern 5051 angetrieben, die mit dem als Einsteckritzel ausgeführten Sonnenrad 5061 im Eingriff stehen, das mittels kraft- und/oder formschlüssiger Verbindung mit der Planetenträgerwelle 4012 verbindbar ist. Der Planetenträger 5011 ist über das Abtriebslager B 507 im entsprechend geformten Getriebegehäuse 5021 der anderen Getriebestufe gelagert. Das Getriebegehäuse 5021 weist die eine Dichtungsstelle 5141 umfassende Schnittstelle auf.

Die Planetenträgerwelle der weiteren Getriebestufe, einer Vorschaltstufe, ist über das Lager 5191 im Getriebegehäuse 5022 gelagert und wird von den auf Planetenbolzen 5042 mittels Planetenlager 5132 gelagerten Planetenrädern 5052 angetrieben, die mit dem als Einsteckritzel ausgeführten Sonnenrad 5162 im Eingriff stehen, das mittels kraft- und/oder formschlüssiger Verbindung mit der Motorwelle 511 verbunden ist. Die Motorwelle 511 ist über das A-Lager Motor 510 in dessen A-Lagerschild gelagert. Dieses ist wiederum mit der genannten die Dichtungsstelle 5142 umfassenden Schnittstelle ausgeführt. Das Getriebegehäuse 5022 weist eintriebsseitig und abtriebsseitig die genannte Schnittstelle auf, wodurch das Baukastenprinzip ausführbar ist. Dabei werden diese Schnittstellen mittels der Dichtungsstellen 5141, 5142 dicht ausgeführt. Der abtriebsseitige Radialwellendichtring 512 dichtet gegen die Umgebung ab. Der eintreibseitige Radialwellendichtring ist wiederum auf reduziertem Durchmesser anbringbar.

Beim Herstellen, insbesondere beim Endbearbeiten, der genannten weiteren Komponente, wie Planetengetriebestufe, Kupplung, A-Lagerschild des herstellereigenen Elektromotors zum Direktanbau ist
- die Bohrung für die Welle dieser Komponente und
- der Lagersitz des diese Welle lagernden Lagers,
- der Lagersitz für den Innenring des den Planetenträger im Gehäuseteil der weiteren Komponente lagernden Lagers und
- der zur Bildung der Schnittstelle vorgesehene Bereich des Gehäuseteils
in einer Aufspannung bearbeitet, insbesondere zur Erreichung möglichst hoher Fertigungsgenauigkeit bei geringen Kosten. Ebenso ist bei der Planetengetriebestufe
- der Lagersitz für den Außenring des den Planetenträger im Gehäuseteil der Planetengetriebestufe lagernden Lagers und
- der zur Bildung der Schnittstelle vorgesehene Bereich des Gehäuseteils der Planetengetriebestufe
in einer Aufspannung bearbeitet, insbesondere zur Erreichung möglichst hoher Fertigungsgenauigkeit bei geringen Kosten.

Diese Bearbeitungsweise ist einerseits kostengünstig und andererseits garantiert sie die hochgenau relative Positionierung der Gehäuseteile und zugehörigen Lager. Der erfindungsgemäße Vorteil des beschriebenen Baukastens, wie Reduktion der Teilevielfalt bei gleichzeitiger großer Variantenvielfalt, ist bewirkt durch die Ankoppelung der Planetengetriebestufe an die weiteren Komponenten. Jedoch ist diese Ankoppelung hoch genau durchzuführen. Dies wiederum wird mit dem beschriebenen Herstellen oder Endbearbeiten in einer Aufspannung erreicht. Somit ist der Vorteil für die Baureihe nur erreichbar mit dem speziellen Fertigen der Planetengetriebestufe und Komponenten.

## Patentansprüche

1. Planetengetriebe mit Planetengetriebestufe
umfassend Planetenräder (105; 205; 305; 4051; 4052; 5051; 5052), die mit einem Sonnenrad (116; 316; 416; 4161; 4162) und einer zum Getriebegehäuse (102; 202; 302; 402; 4021; 5021; 5022) vorgesehenen Innenverzahnung im Eingriff stehen,
wobei die Planetenräder in einem, den Abtrieb bildenden, drehbaren Planetenträger (101; 201; 301; 401; 4011; 5011) gelagert sind, dem abtriebsseitig ein Dichtungselement (112; 212; 312; 412; 512) zugeordnet ist,
wobei dem Planetengetriebe, insbesondere der Planetengetriebestufe, eintriebsseitig ein weiteres Dichtelement (119; 219; 319) zugeordnet ist,
wobei
das Getriebegehäuse eintriebsseitig derart geformt ist, dass eine Schnittstelle gebildet ist zum Verbinden mit weiteren Komponenten, die mindestens eine mit dem Sonnenrad verbundene Welle (117) umfassen,
**dadurch gekennzeichnet, dass** das eintriebsseitige Dichtungselement axial abtriebsseitiger als das eintriebsseitige Abtriebslager (120) der Welle angeordnet ist,
wobei das Gehäuse der Komponente einen Sitz für den Innenring des eintriebsseitigen Lagers (107; 207; 307; 407; 507) der Getriebestufe aufweist und der entsprechende Außenring dieses Lagers im Planetenträger angeordnet ist.

2. Planetengetriebe nach mindestens einem der vorangegangenen Ansprüche,
**dadurch gekennzeichnet, dass**
die weiteren Komponenten als
- eine eine Kupplungswelle umfassende Kupplung,
- einen eine Motorwelle umfassenden Elektromotor
- eine weitere Getriebestufe, umfassend einen Planetenträger, der zur Planetengetriebestufe hin als Welle ausgeformt ist,
ausbildbar sind.

3. Planetengetriebe nach mindestens einem der vorangegangenen Ansprüche,
**dadurch gekennzeichnet, dass**
das der Planetengetriebestufe eintriebsseitig zugeordnete weitere Dichtelement auf der von der Komponente umfassten Welle der angeordnet ist, wobei der Durchmesser der Welle im Bereich des Dichtelements reduziert ist gegenüber dem Durchmesser der Welle in einem axial weiter eintriebsseitig liegenden Bereich

4. Planetengetriebe nach mindestens einem der vorangegangenen Ansprüche,
**dadurch gekennzeichnet, dass**
der axial weiter eintriebsseitig liegenden Bereich
- der Aufnahmebereich für die Rotorwelle
- ein Bereich der Rotorwelle im Inneren des Elektromotors
- ein axial weiter eintriebsseitig liegender Bereich des als Welle ausgeformten Planetenträgers in der weiteren Getriebestufe
ist.

5. Planetengetriebe nach mindestens einem der vorangegangenen Ansprüche,
**dadurch gekennzeichnet, dass**
der Planetenträger eintriebsseitig über ein Lager im Gehäuseteil der Planetengetriebestufe gelagert ist und abtriebsseitig über ein Lager im Gehäuseteil der weiteren Komponente lagerbar ist.

6. Planetengetriebe nach mindestens einem der vorangegangenen Ansprüche,
**dadurch gekenntzeichnet, dass**
beim Herstellen der weiteren Komponente
- die Bohrung für die Welle dieser Komponente und
- der Lagersitz des diese Welle lagernden Lagers,
- der Lagersitz für den Innenring des den Planetenträger im Gehäuseteil der weiteren Komponente lagernden Lagers und
- der zur Bildung der Schnittstelle vorgesehene Bereich des Gehäuseteils
in einer Aufspannung bearbeitbar ist, insbesondere zur Erreichung möglichst hoher Fertigungsgenauigkeit bei geringen Kosten.

7. Planetengetriebe nach mindestens einem der vorangegangenen Ansprüche,
**dadurch gekennzeichnet, dass**
beim Herstellen der Planetengetriebestufe
- der Lagersitz für den Außenring des den Planetenträger im Gehäuseteil der Planetengetriebestufe lagernden Lagers und
- der zur Bildung der Schnittstelle vorgesehene Bereich des Gehäuseteils der Planetengetriebestufe
in einer Aufspannung bearbeitet ist, insbesondere zur Erreichung möglichst hoher Fertigungsgenauigkeit bei geringen Kosten.

8. Planetengetriebe nach mindestens einem der vorangegangenen Ansprüche,
**dadurch gekennzeichnet, dass**
die Planetengetrlebestufe für eine Baureihe von Getriebemotoren vorgesehen ist,
wobei die Baureihe mindestens eine Baugröße umfasst, wobei die Baugröße jeweils mindestens eine Variante umfassen, wobei die Varianten jeweils mindestens einen Elektromotor und eine oder mehrere Getriebestufen umfassen,
wobei die Planetengetriebestufe als mindestens eine dieser Getriebestufe vorgesehen ist,
wobei die Getriebestufen jeweils eintriebsseitig eine Schnittstelle derart aufweisen, dass die weitere Komponente, die abtriebsseitig eine entsprechend ausgebildete Schnittstelle aufweist, verbindbar ist.

9. Planetengetriebe nach mindestens einem der vorangegangenen Ansprüche,
**dadurch gekennzeichnet, dass**
das Sonnenrad eintriebsseitig mit einer Welle der weiteren Komponente Je nach Übersetzungszahl mittels Einsteckritzel oder Aufsteckritzel verbindbar ist

10. Planetengetriebe nach mindestens einem der vorangegangenen Ansprüche,
**dadurch gekennzeichnet, dass**
bei einer Variante ein Elektromotor, insbesondere ein industrieüblicher Standard-Motor, abtriebsseitig mit einer anderen Schnittstelle, insbesondere einer nach NEMA oder IEC genormten Schnittstelle, *ausführb*a*r* ist und über eine Kupplung mit der Getriebestufe verbindbar ist, wobei die Kupplung zu den weiteren Komponenten gehört.

11. Getriebemotor
**dadurch gekennzeichnet, dass**
mindestens eine Planetengetriebe nach mindestens einem der vorangegangenen Ansprüche mit einem Elektromotor zu einem als Antrieb verwendbaren Getriebemotor verbindbar ist.

## Claims

1. A planetary gear with planetary gear stage
comprising planet gears (105; 205; 305; 4051; 4052; 5051; 5052) which engage with a sun gear (116; 316; 4161; 4162) and internal teeth provided on the transmission casing (102; 202; 302; 402; 4021; 5021; 5022),
the planet gears being mounted in a rotatable pinion cage (101; 201; 301; 401; 4011; 5011) forming the output, with which a sealing element (112; 212; 312; 412; 512) is associated on the output side,
a further sealing element (119; 219; 319) being associated with the planetary gear, in particular the planetary gear stage, on the input side,
the transmission casing on the input side being formed such that an interface is formed for connection to further components, which comprise at least one shaft (117) connected to the sun gear,
**characterised in that**
the input-side sealing element is arranged axially more to the output side than the input-side output bearing (120) of the shaft,
the casing of the component having a seat for the inner ring of the input-side bearing (107; 207; 307; 407; 507) of the gear stage and the corresponding outer ring of this bearing being arranged in the pinion cage.

2. A planetary gear according to at least one of the preceding claims, **characterised in that**
the further components can be embodied as
- a coupling comprising a coupling shaft,
- an electric motor comprising a rotor shaft
- a further gear stage, comprising a pinion cage, which towards the planetary gear stage is formed as a shaft.

3. A planetary gear according to at least one of the preceding claims, **characterised in that**
the further sealing element associated with the planetary gear stage on the input side is arranged on the shaft [of the] which is encompassed by the component, the diameter of the shaft in the region of the sealing element being reduced compared with the diameter of the shaft in a region located axially further on the input side.

4. A planetary gear according to at least one of the preceding claims, **characterised in that**
the region located axially further on the input side is
- the receiving region for the rotor shaft
- a region of the rotor shaft in the interior of the electric motor
- a region located axially further on the input side of the pinion cage formed as a shaft in the further gear stage.

5. A planetary gear according to at least one of the preceding claims, **characterised in that**
the pinion cage on the input side is mounted via a bearing in the casing part of the planetary gear stage and can be mounted on the output side via a bearing in the casing part of the further component.

6. A planetary gear according to at least one of the preceding claims, **characterised in that**
upon manufacturing the further component
- the bore for the shaft of this component and
- the bearing seat of the bearing which bears this shaft,
- the bearing seat for the inner ring of the bearing which bears the pinion cage in the casing part of the further component and
- the region of the casing part which is intended for the formation of the interface
can be machined in a chuck, in particular to achieve as high as possible manufacturing accuracy at low cost.

7. A planetary gear according to at least one of the preceding claims, **characterised in that**
upon manufacturing the planetary gear stage
- the bearing seat for the outer ring of the bearing which bears the pinion cage in the casing part of the planetary gear stage and
- the region of the casing part of the planetary gear stage which is intended for the formation of the interface
is machined in a chuck, in particular to achieve as high as possible manufacturing accuracy at low cost.

8. A planetary gear according to at least one of the preceding claims,
**characterised in that**
the planetary gear stage is provided for a series of gear motors,
the series comprising at least one size, the sizes each comprising at least one variant, the variants each comprising at least one electric motor and one or more gear stages,
the planetary gear stage being provided as at least one of this gear stage [sic],
the gear stages each having on the input side an interface, such that the further component, which has a correspondingly formed interface on the output side, is able to be connected.

9. A planetary gear according to at least one of the preceding claims, **characterised in that**
the sun gear on the input side can be connected to a shaft of the further component according to the transmission ratio by means of insertable pinions or attachable pinions.

10. A planetary gear according to at least one of the preceding claims, **characterised in that**
in a variant an electric motor, in particular an industry-standard standard motor, can be embodied on the output side with a different interface, in particular an interface standardised according to NEMA or IEC and can be connected via a coupling to the gear stage, the coupling being one of the further components.

11. A gear motor,
**characterised in that**
at least one planetary gear according to at least one of the preceding claims can be connected to an electric motor to form a gear motor which can be used as a drive.

## Revendications

1. Engrenage planétaire avec un étage d'engrenage planétaire
comprenant des satellites (105 ; 205 ; 305 ; 4051 ; 4052 ; 5051 ; 5052) qui sont en prise avec un planétaire (116 ;316 ; 4161 ; 4162) et une denture intérieure prévue sur le carter d'engrenage (102 ; 202 ; 302 ; 402 ; 4021 ; 5021 ; 5022),
les satellites étant montés dans un porte-satellites (101 ; 201 ; 301 ; 401 ; 4011 ; 5011) tournant formant la sortie, auquel un élément d'étanchéité (112 ; 212 ; 312 ; 412 ; 512) est associé côté sortie,
un autre élément d'étanchéité (119 ; 219 ; 319) étant associé à l'engrenage planétaire, en particulier à l'étage d'engrenage planétaire, côté entrée,
le carter d'engrenage étant conformé côté entrée de manière que soit formée une interface pour la liaison à d'autres composants qui comprennent au moins un arbre (117) raccordé au planétaire,
**caractérisé en ce que**
l'élément d'étanchéité côté entrée est disposé axialement plus loin côté sortie que le palier de sortie (120) côté entrée de l'arbre,
le carter du composant présentant un siège pour la bague intérieure du palier côté entrée (107 ; 207 ; 307 ; 407 ; 507) de l'étage d'engrenage et la bague extérieure correspondante de ce palier étant disposée dans le porte-satellites.

2. Engrenage planétaire selon au moins l'une des revendications précédentes,
**caractérisé en ce que**
les autres composants sont réalisables sous la forme
- d'un embrayage comprenant un arbre d'embrayage,
- d'un moteur électrique comprenant un arbre de rotor,
- d'un autre étage d'engrenage comprenant un porte-satellites qui est conformé en arbre en direction de l'étage d'engrenage planétaire.

3. Engrenage planétaire selon au moins l'une des revendications précédentes,
**caractérisé en ce que**
l'autre élément d'étanchéité associé à l'étage d'engrenage planétaire côté entrée est disposé sur l'arbre compris par le composant, le diamètre de l'arbre étant, dans la zone de l'élément d'étanchéité, réduit par rapport au diamètre de l'arbre dans une zone située axialement plus loin côté entrée.

4. Engrenage planétaire selon au moins l'une des revendications précédentes,
**caractérisé en ce que**
la zone située axialement plus loin côté entrée est
- la zone réceptrice pour l'arbre de rotor
- une zone de l'arbre de rotor à l'intérieur du moteur électrique
- une zone située axialement plus loin côté entrée du porte-satellites conformé en arbre dans l'autre étage d'engrenage.

5. Engrenage planétaire selon au moins l'une des revendications précédentes,
**caractérisé en ce que**
le porte-satellites peut être monté côté entrée par l'intermédiaire d'un palier dans la partie de carter de l'étage d'engrenage planétaire et côté sortie par l'intermédiaire d'un palier dans la partie de carter de l'autre composant.

6. Engrenage planétaire selon au moins l'une des revendications précédentes,
**caractérisé en ce que**
pour la fabrication de l'autre composant,
- le perçage pour l'arbre de ce composant et
- le siège de palier du palier supportant cet arbre,
- le siège de palier pour la bague intérieure du palier supportant le porte-satellites dans la partie de carter de l'autre composant et
- la zone de la partie de carter prévue pour former l'interface
peuvent être usinés dans un dispositif de serrage, en particulier pour atteindre une précision de fabrication maximale à un coût minimal.

7. Engrenage planétaire selon au moins l'une des revendications précédentes,
**caractérisé en ce que**
pour la fabrication de l'étage d'engrenage planétaire,
- le siège de palier pour la bague extérieure du palier supportant le porte-satellites dans la partie de carter de l'étage d'engrenage planétaire et
- la zone de la partie de carter de l'étage d'engrenage planétaire prévue pour former l'interface
sont usinés dans un dispositif de serrage, en particulier pour atteindre une précision de fabrication maximale à un coût minimal.

8. Engrenage planétaire selon au moins l'une des revendications précédentes,
**caractérisé en ce que**
l'étage d'engrenage planétaire est prévu pour une série de moteurs à engrenages,
la série comprenant au moins une taille de construction, les tailles de construction comprenant chacune au moins une variante, les variantes comprenant chacune au moins un moteur électrique et un ou plusieurs étages d'engrenage,
l'étage d'engrenage planétaire étant prévu sous la forme d'au moins un de ces étages d'engrenage,
les étages d'engrenage présentant chacun côté entrée une interface de telle manière que l'autre composant, qui présente côté sortie une interface conformée de façon correspondante, puisse y être raccordé.

9. Engrenage planétaire selon au moins l'une des revendications précédentes,
**caractérisé en ce que**
le planétaire peut, selon le rapport de réduction, être raccordé côté entrée à un arbre de l'autre composant au moyen d'un pignon mâle ou femelle.

10. Engrenage planétaire selon au moins l'une des revendications précédentes,
**caractérisé en ce que**
dans une variante du moteur électrique, en particulier un moteur standard usuel dans l'industriel est réalisable côté sortie avec une autre interface, en particulier une interface normalisée NEMA ou IEC et raccordable à l'étage d'engrenage par l'intermédiaire d'un embrayage, l'embrayage faisant partie des autres composants.

11. Moteur à engrenages
**caractérisé en ce que**
au moins un engrenage planétaire selon au moins l'une des revendications précédentes est raccordable à un moteur électrique pour former un moteur à engrenages utilisable comme entraînement.
